# EUROPÄISCHE PATENTSCHRIFT

(11) **EP 3 384 411 B1**
(45) Veröffentlichungstag und Bekanntmachung des Hinweises auf die Patenterteilung: **14.08.2019**
(21) Anmeldenummer: 16804704.1
(22) Anmeldetag: 17.11.2016
(51) Int. Cl.: H04L 29/08, G06F 11/00, G06F 9/54, G06F 8/41

(54) **VERFAHREN ZUM ÜBERTRAGEN EINES FUNKTIONSBEFEHLS ZWISCHEN EINEM KRAFTFAHRZEUG UND EINER FAHRZEUGEXTERNEN EINRICHTUNG SOWIE SCHNITTSTELLENVORRICHTUNG UND SYSTEM**
METHOD FOR TRANSMITTING A FUNCTION COMMAND BETWEEN A MOTOR VEHICLE AND A DEVICE OUTSIDE THE VEHICLE, AND INTERFACE APPARATUS AND SYSTEM
DISPOSITIF DE TRANSMISSION D'UNE INSTRUCTION FONCTIONNELLE ENTRE UN VÉHICULE AUTOMOBILE ET UN DISPOSITIF EXTÉRIEUR AU VÉHICULE, ET DISPOSITIF D'INTERFACE ET SYSTÈME

(30) Priorität: 03.12.2015 DE 102015015627
(43) Veröffentlichungstag der Anmeldung: 10.10.2018
(73) Patentinhaber: Audi AG, 85045 Ingolstadt (DE)
(72) Erfinder: TAUBER, Matthias, 95473 Creußen (DE)
(86) Internationale Anmeldenummer: PCT/EP2016/077976
(87) Internationale Veröffentlichungsnummer: WO 2017/093032

(56) Entgegenhaltungen:
- US-A1- 2006 041 337

## Beschreibung

Die Erfindung betrifft ein Verfahren zum Übertragen eines Funktionsbefehls zwischen einem Kraftfahrzeug und einer fahrzeugexternen Einrichtung. Die Erfindung betrifft auch eine Schnittstellenvorrichtung sowie ein System mit einer dementsprechenden Schnittstellenvorrichtung.

Verfahren zum Übertragen eines Funktionsbefehls zwischen einem Kraftfahrzeug und einer fahrzeugexternen Einrichtung sind aus dem Stand der Technik bekannt. So wird dem Kraftfahrzeug beispielsweise durch ein Applikationsprogramm der Einrichtung ein Funktionsbefehl erteilt. Anhand des Funktionsbefehls wird dann beispielsweise eine Verriegelung einer Türe des Kraftfahrzeugs bewirkt.

Weiterhin ist bekannt, dass eine Kommunikation eines mobilen Applikationsprogramms der Einrichtung mit dem Kraftfahrzeug üblicherweise ohne Unterbrechung von einem Endpunkt zu einem anderen Endpunkt stattfindet. Nachteilig daran ist, dass eine Absicherung und Erprobung des mobilen Applikationsprogramms somit erst mit der Fertigstellung aller an der Kommunikation beteiligten Komponenten möglich ist. Für die Erprobung des Applikationsprogramms der Einrichtung in der Entwicklungsphase ist es üblicherweise erforderlich, dass das Kraftfahrzeug zu diesem Zweck als anderer Endpunkt bereitgestellt wird.

Die DE 10 2009 018 761 A1 beschreibt ein Verfahren zur Aktualisierung einer Softwarekomponente eines Kraftfahrzeugs. Es wird eine Fahrzeugkonfigurationsinformation ermittelt, die zumindest die Information umfasst, welche Hardwarekomponenten oder welche Softwarekomponenten im konkreten Kraftfahrzeug vorhanden sind. Anhand der Fahrzeugkonfigurationsinformation wird geprüft, ob eine Softwarekomponente zu aktualisieren ist. Es wird eine entsprechende Aktualisierungsvorschrift bereitgestellt und die zu aktualisierende Softwarekomponente wird anhand der Aktualisierungsvorschrift aktualisiert.

Aus der DE 10 2013 104 892 A1 ist ein Verfahren zur Inbetriebnahme eines Kraftfahrzeugs mit einer Mehrzahl von elektronischen Einheiten bekannt. Der Ist-Datenstand der elektronischen Einheiten wird ausgelesen und mit einem Soll-Datenstand in einem Datenspeicher verglichen. Bei Abweichungen zwischen dem Ist-Datenstand und dem Soll-Datenstand wird eine automatische Speicherung der Soll-Daten in der elektronischen Einheit durchgeführt.

In der DE 10 2013 216 055 A1 wird ein System offenbart, welches einen Prozessor einer mobilen Vorrichtung umfasst. Der Prozessor ist dafür ausgelegt, drahtlos sowohl mit einem fernen Server als auch mit einem Fahrzeugrechensystem zu kommunizieren. Der Prozessor ist ferner dazu ausgelegt, eine Modulversion beim Fahrzeugrechensystem abzufragen, die Modulversion zu einem fernen System zu übertragen und Informationen zu empfangen, die sich auf eine aktualisierte Modulversion und ein aktualisiertes Modul beziehen. Der Prozessor ist auch dafür ausgelegt, Batterieinformationen beim Fahrzeugrechensystem anzufragen, einen Nutzer über eine Batterieeignung für eine empfohlene Installation des aktualisierten Moduls zu informieren und die Installation fortzusetzen sowie das Fahrzeugrechensystem anzuweisen, das aktualisierte Modul herunterzuladen und zu installieren.

Die US 2014/0018129 A1 offenbart ein Verfahren zum Übertragen eines Funktionsbefehls von einer fahrzeugexternen Einrichtung an eine elektronische Fahrzeugkomponente. Hierzu ist eine Anwendungsprogrammierschnittstelle (API) vorgesehen, die eine Vielzahl von gültigen Funktionsbefehlen für die Weiterleitung an die Fahrzeugkomponente bereitstellt.

Die US 2011/0225260 A1 beschreibt ein Verfahren zum Übertragen eines Funktionsbefehls (z.B. Starten und Stoppen des Motors, Entriegeln der Türen, oder Abfrage des Batteriestatus) zwischen einem Kraftfahrzeug und einer fahrzeugexternen Einrichtung. Die Übertragung kann über eine portable Verbindungsvorrichtung erfolgen, die eine Kommunikationsverbindung zwischen dem Fahrzeug und der Einrichtung bereitstellt. Die Eingabe von Funktionsbefehlen des Anwenders erfolgt auf Basis einer anwendungsspezifischen Verbindungsanwendung, die auf der externen Einrichtung gespeichert sein kann und dort auch ausgeführt wird. Sie lädt dazu vor der Übertragung von Funktionsbefehlen eine Vorrichtungsanwendung auf die Verbindungsvorrichtung.

In der US 2011/0071734 A2 wird ein Verfahren zur Fernsteuerung von Fahrzeugkomponenten durch eine fahrzeugexterne Einrichtung beschrieben. Funktionsbefehle werden über einen externen Server übertragen, die eine Kommunikationsverbindung zwischen einem Handy und dem Fahrzeug herstellt. Vor der Übertragung von Funktionsbefehlen an das Fahrzeug erfolgt in der Schnittstelle ihre Authentifizierung. Dazu werden sie üblicherweise mit einer Vielzahl gültiger Funktionsbefehle verglichen.

In der US 2006/0041337 A1 wird ein System offenbart, mittels dessen Programme, die auf Fahrzeugcomputern laufen, per Fernzugriff geändert werden können. Das System umfasst einen Internetserver, einen Computer, der über das Internet mit dem Internetserver verbunden ist, sowie eine Schnittstellenvorrichtung, mittels derer der Computer an eine Schnittstelle des Fahrzeugcomputers gekoppelt werden kann. Werden an einem Programm, das von dem Fahrzeugcomputer verwendet wird, Änderungen vorgenommen, kann das entsprechende Programm aus dem Internet auf den Computer heruntergeladen werden. Um heruntergeladene Programmbefehle oder Daten zur Verwendung durch den Fahrzeugcomputer von dem Computer auf den Fahrzeugcomputer zu kopieren, wird die Schnittstellenvorrichtung, beispielsweise eine OBD-Schnittstelle, also eine Onboard Diagnose Schnittstelle, genutzt.

Es ist Aufgabe der Erfindung, ein Verfahren, eine Schnittstellenvorrichtung sowie ein System zu schaffen, mit welchem ein Funktionsbefehl zwischen einem Kraftfahrzeug und einer fahrzeugexternen Einrichtung einfacher überprüft werden kann.

Die Aufgabe wird erfindungsgemäß durch ein Verfahren, durch eine Schnittstellenvorrichtung sowie durch ein System mit den Merkmalen gemäß den jeweiligen unabhängigen Ansprüchen gelöst.

Bei einem erfindungsgemäßen Verfahren wird ein Funktionsbefehl zwischen einem Kraftfahrzeug und einer fahrzeugexternen, insbesondere portablen, Einrichtung übertragen. Der Funktionsbefehl wird über eine eine Kommunikationsverbindung zwischen dem Kraftfahrzeug und der Einrichtung bereitstellende fahrzeugexterne, insbesondere stationäre, Schnittstellenvorrichtung übertragen. Durch die Schnittstellenvorrichtung wird eine Schnittstelle bereitgestellt, durch welche eine Vielzahl von gültigen Funktionsbefehlen bereitgestellt wird. Die Schnittstellenvorrichtung ist dabei außerhalb des Kraftfahrzeugs und außerhalb der fahrzeugexternen Einrichtung angeordnet. Die Schnittstellenvorrichtung ist dabei als stationärer Server beziehungsweise als Back-End ausgebildet. Das Back-End ist auch ein so genannter modularer Back-End-Baukasten (MBB). Die Schnittstelle ist dabei als Programmierschnittstelle (API) oder als funktionsorientierte Programmierschnittstelle oder als dateiorientierte Programmierschnittstelle oder als objektorientierte Programmierschnittstelle oder als protokollorientierte Programmierschnittstelle oder als Binärschnittstelle (ABI - application binary interface) ausgebildet. Der Funktionsbefehl wird zwischen dem Kraftfahrzeug und der Einrichtung nur über die Schnittstelle der Schnittstellenvorrichtung übertragen. Der Funktionsbefehl wird in der Schnittstellenvorrichtung mit der Vielzahl von gültigen Funktionsbefehlen verglichen. Anhand des Vergleichs wird bestimmt, ob der Funktionsbefehl schnittstellenkonform ist. Der Funktionsbefehl wird nur weitergeleitet, falls er schnittstellenkonform ist.

Der Erfindung liegt die Erkenntnis zugrunde, dass für eine Überprüfung des Funktionsbefehls keine Notwendigkeit besteht, dass das jeweils am anderen Ende der Kommunikationsverbindung stehende Objekt, also das Kraftfahrzeug oder die Einrichtung, tatsächlich vorhanden ist, um den Funktionsbefehl zu entwickeln oder zu testen. Zu diesem Zweck wird die Schnittstellenvorrichtung bereitgestellt. Die Schnittstellenvorrichtung ist in die Kommunikationsverbindung zwischen dem Kraftfahrzeug und der Einrichtung zwischengeschaltet, sodass das Kraftfahrzeug auf die Schnittstellenvorrichtung zugreifen kann und die Einrichtung auf die Schnittstellenvorrichtung zugreifen kann. Während der Entwicklungsphase ist es nun nicht mehr notwendig, dass das am anderen Ende der Kommunikationsverbindung stehende Objekt vorhanden ist, da der Funktionsbefehl lediglich auch mit der in der Kommunikationsverbindung angeordneten Schnittstellenvorrichtung getestet werden kann.

Durch die Schnittstellenvorrichtung wird die Schnittstelle bereitgestellt, welche wiederum eine Vielzahl von gültigen Funktionsbefehlen bereitstellt oder definiert. Das bedeutet, dass durch die Schnittstelle insbesondere eine Programmierschnittstelle (API - application programming interface) bereitgestellt wird. Die Programmierschnittstelle beziehungsweise Schnittstelle zur Anwendungsprogrammierung ist ein Programmteil, der von einem Softwaresystem anderen Programmen zur Anbindung an das System zur Verfügung gestellt wird.

Durch das Bereitstellen der Schnittstelle durch die Schnittstellenvorrichtung kann nun ein Applikationsprogramm der fahrzeugexternen Einrichtung ohne das Kraftfahrzeug nur durch Bereitstellen der Schnittstelle entwickelt werden. Ein Applikationsprogramm der fahrzeugexternen Einrichtung kann also nun beispielsweise gegen diese Schnittstelle entwickelt werden. Das Kraftfahrzeug selbst, welches den eigentlichen Funktionsbefehl des Applikationsprogramms ausführt, ist zum Zeitpunkt der Entwicklung und den mit der Entwicklung einhergehenden Tests nicht mehr nötig.

Andersherum kann beispielsweise auch ein Applikationsprogramm des Kraftfahrzeugs gegen die Schnittstelle entwickelt werden, ohne dass die Einrichtung aktuell bereitgestellt wird. Der Vorteil der Schnittstellenvorrichtung ist somit, dass eine Entwicklung von Applikationsprogrammen, welche den Funktionsbefehl aussenden, unabhängig von dem Ziel des Funktionsbefehls durchgeführt werden kann. Dadurch kann die Entwicklung des jeweiligen Applikationsprogramms vereinfacht werden. Weiterhin kann damit aber auch die Kompatibilität des Funktionsbefehls für weitere Zugriffsziele, beispielsweise zukünftige Kraftfahrzeuge und/oder zukünftige fahrzeugexterne Einrichtungen in einfacher Weise eingehalten werden.

Durch die Schnittstellenvorrichtung wird eine sogenannte Zwischenschicht in einem Back-End beziehungsweise der Schnittstellenvorrichtung erzeugt, die die Schnittstelle zwischen dem Kraftfahrzeug und einem Applikationsprogramm der fahrzeugexternen Einrichtung ist. Die Kommunikationsverbindung zwischen dem Kraftfahrzeug und der Einrichtung wir durch die Schnittstellenvorrichtung entkoppelt und dadurch abgesichert.

Vorzugsweise ist es vorgesehen, dass der Funktionsbefehl mit der Vielzahl der gültigen Funktionsbefehle der Schnittstelle verglichen wird, und bei einer Abweichung zwischen dem Funktionsbefehl und jedem der gültigen Funktionsbefehle der Schnittstelle ein Fehler des Funktionsbefehls erkannt wird. Dadurch wird ermöglicht, dass der Funktionsbefehl schnittstellenkonform entwickelt wird. Weiterhin wird dadurch ermöglicht, dass der Funktionsbefehl bei einem Weiterleiten des Funktionsbefehls über die Schnittstellenvorrichtung hinaus, also zu dem Kraftfahrzeug oder zu der Einrichtung, dort die gewünschte Funktion durchführt, beispielsweise einen Zustand des Kraftfahrzeugs oder der Einrichtung verändert.

Weiterhin ist es vorzugsweise vorgesehen, dass der Funktionsbefehl von der Einrichtung an das Kraftfahrzeug gerichtet wird, und durch den Funktionsbefehl ein Zustand einer Kraftfahrzeugkomponente des Kraftfahrzeugs angepasst wird. So kann der Funktionsbefehl beispielsweise durch ein Applikationsprogramm der Einrichtung erzeugt werden und an das Kraftfahrzeug gerichtet werden. Durch den Funktionsbefehl kann dann beispielsweise eine Fahrzeugentsperrung durchgeführt werden. Es kann aber beispielsweise auch ein Musikaustausch durchgeführt werden, sodass beispielsweise Musik von der fahrzeugexternen Einrichtung zu der Kraftfahrzeugkomponente des Kraftfahrzeugs abhängig von dem Funktionsbefehl übertragen wird. Das Richten des Funktionsbefehls von der Einrichtung an das Kraftfahrzeug wird durch das Bereitstellen der Schnittstelle der Schnittstellenvorrichtung einfacher und zuverlässiger.

In einer weiteren Ausführungsform kann es vorgesehen sein, dass der Funktionsbefehl von dem Kraftfahrzeug an die Einrichtung gerichtet wird und durch den Funktionsbefehl zumindest ein Zustand einer Programmkomponente der Einrichtung angepasst wird. Durch den Funktionsbefehl können dann beispielsweise Musikdaten und/oder Adressdaten von dem Kraftfahrzeug an die Einrichtung übertragen werden. Durch die Schnittstelle der Schnittstellenvorrichtung kann der Funktionsbefehl wiederum einfacher und zuverlässiger von dem Kraftfahrzeug an die Einrichtung gerichtet werden und der Zustand der Programmkomponente der Einrichtung kann zuverlässiger angepasst werden. Die Programmkomponente kann beispielsweise von einem Applikationsprogramm der Einrichtung oder aber von dem Betriebssystem der Einrichtung umfasst werden.

Insbesondere kann es vorgesehen sein, dass der Funktionsbefehl zwischen dem Kraftfahrzeug und der Einrichtung während einer Entwicklungsphase des Funktionsbefehls über die Schnittstelle übertragen wird. So ist es insbesondere während der Entwicklungsphase möglich den Funktionsbefehl gegen die Schnittstelle zu testen. Der Funktionsbefehl kann nun entwickelt werden, ohne dass das für den Funktionsbefehl vorgesehene Ziel, also das Kraftfahrzeug oder die Einrichtung vorhanden ist. Dadurch wird das Entwickeln des Funktionsbefehls vereinfacht. Weiterhin kann durch das Bereitstellen der Schnittstelle auch beispielsweise einem Dritten das Entwickeln von Funktionsbefehlen ermöglicht werden, welcher beispielsweise lediglich über die Einrichtung verfügt, aber nicht über das Kraftfahrzeug. Eine Vielzahl von neuen Funktionsbefehlen für die Einrichtung kann dadurch in einfacher Weise bereitgestellt werden.

In einer weiteren Ausführungsform kann es vorgesehen sein, dass der Funktionsbefehl zwischen dem Kraftfahrzeug und der Einrichtung während des operativen Betriebs des Kraftfahrzeugs über die Schnittstelle übertragen wird. Auch während eines operativen Betriebs bringt das Übertragen des Funktionsbefehls über die Schnittstelle Vorteile mit sich. So kann durch die Schnittstellenvorrichtung eine Überprüfungsinstanz für den Funktionsbefehl bereitgestellt werden. Durch die Schnittstellenvorrichtung wird dann die Kompatibilität des Funktionsbefehls überprüft und gegebenenfalls bei festgestellter fehlerhafter Funktion des Funktionsbefehls eine Warnung ausgegeben und/oder die Weiterleitung des Funktionsbefehls unterbrochen. Durch die Schnittstelle der Schnittstellenvorrichtung kann das Übertragen des Funktionsbefehls während des operativen Betriebs zuverlässiger erfolgen.

Weiterhin ist es vorzugsweise vorgesehen, dass beim Übertragen des Funktionsbefehls eine Sicherheitssignatur im Kraftfahrzeug und/oder in der Einrichtung überprüft wird, und die Sicherheitssignatur auch in der Schnittstellenvorrichtung überprüft wird. Durch die Schnittstellenvorrichtung wird die Sicherheit bei der Übertragung des Funktionsbefehls erhöht. So kann durch die Sicherheitssignatur festgestellt werden, falls der Funktionsbefehl von einer nicht zum Ausgeben des Funktionsbefehls autorisierten Stelle erzeugt oder verändert wurde. Dadurch kann beispielsweise ein Missbrauch der durch den Funktionsbefehl bereitgestellten Funktionen verhindert werden. Die Schnittstellenvorrichtung kann durch das Überprüfen der Sicherheitssignatur sicherer betrieben werden.

Die Erfindung betrifft auch eine Schnittstellenvorrichtung mit einem Prozessor und einer Speichereinheit, welche dazu ausgebildet ist, einen Funktionsbefehl von einem Kraftfahrzeug und/oder von einer fahrzeugexternen Einrichtung zu empfangen, wobei die Schnittstellenvorrichtung eine Schnittstelle bereitstellt, welche eine Vielzahl von gültigen Funktionsbefehlen umfasst. Die Schnittstellenvorrichtung ist dabei als stationärer Server beziehungsweise als Back-End ausgebildet. Das Back-End ist auch ein so genannter modularer Back-End-Baukasten (MBB). Die Schnittstellenvorrichtung ist insbesondere außerhalb des Kraftfahrzeugs und außerhalb der fahrzeugexternen Einrichtung angeordnet. Die Verbindung von dem Kraftfahrzeug und/oder der Einrichtung zu der Schnittstellenvorrichtung erfolgt beispielsweise drahtlos über eine mobile Datenverbindung. Die Schnittstelle ist dabei als Programmierschnittstelle (API) oder als funktionsorientierte Programmierschnittstelle oder als dateiorientierte Programmierschnittstelle oder als objektorientierte Programmierschnittstelle oder als protokollorientierte Programmierschnittstelle oder als Binärschnittstelle (ABI - application binary interface) ausgebildet. Die Schnittstellenvorrichtung ist dazu ausgebildet ist, den Funktionsbefehl mit der Vielzahl von gültigen Funktionsbefehlen zu vergleichen. Anhand des Vergleichs wird bestimmt, ob der Funktionsbefehl schnittstellenkonform ist. Der Funktionsbefehl wird nur weitergeleitet, falls er schnittstellenkonform ist.

Durch die Schnittstellenvorrichtung wird eine Schnittstelle bereitgestellt, welche eine Vielzahl von gültigen Funktionsbefehlen bereitstellt. Die Schnittstelle ist dann dazu ausgebildet, einen Funktionsbefehl von einem Kraftfahrzeug oder einen Funktionsbefehl von einer fahrzeugexternen Einrichtung zu empfangen.

Weiterhin betrifft die Erfindung ein System mit einem Kraftfahrzeug und/oder einer fahrzeugexternen, schnittstellenvorrichtungsexternen, insbesondere portablen Einrichtung und einer erfindungsgemäßen Schnittstellenvorrichtung.

Vorzugsweise ist vorgesehen, dass die Einrichtung als mobiles Endgerät, insbesondere als Smartphone, ausgebildet ist. Das mobile Endgerät kann aber beispielsweise auch als Tablet-Computer oder beliebige portable Computereinheit ausgebildet sein. So kann das mobile Endgerät beispielsweise auch als Smartwatch ausgebildet sein.

Die mit Bezug auf das erfindungsgemäße Verfahren vorgestellten bevorzugten Ausführungsformen und deren Vorteile gelten sowohl entsprechend für die erfindungsgemäße Schnittstellenvorrichtung als auch für das erfindungsgemäße System.

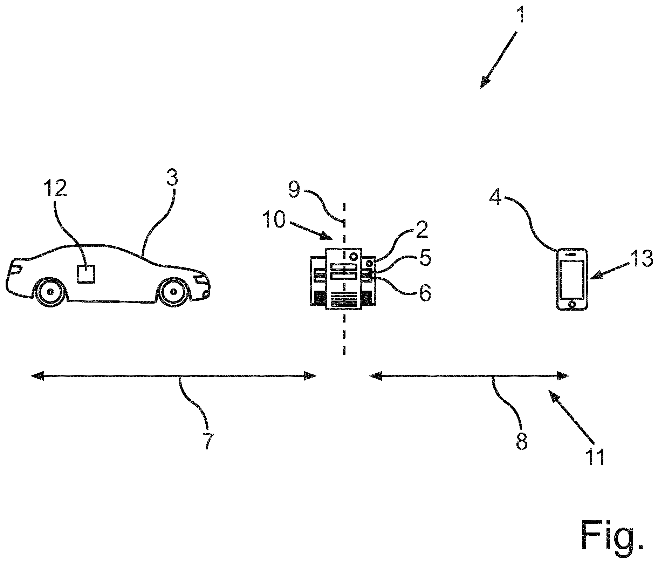

Weitere Merkmale der Erfindung ergeben sich aus den Ansprüchen, der Figur und der Figurenbeschreibung. Die vorstehend in der Beschreibung genannten Merkmale und Merkmalskombinationen, sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in der Figur nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Ausführungsbeispiele der Erfindung werden nachfolgend anhand einer schematischen Zeichnung näher erläutert.

Dabei zeigt die einzige Figur eine schematische Veranschaulichung eines Ausführungsbeispiels eines erfindungsgemäßen Systems mit einem Kraftfahrzeug, einer fahrzeugexternen Einrichtung und einer Schnittstellenvorrichtung.

In der Figur werden gleiche oder funktionsgleiche Elemente mit den gleichen Funktionszeichen versehen.

In der Figur ist schematisch ein System 1 dargestellt. Das System 1 umfasst eine Schnittstellenvorrichtung 2, ein Kraftfahrzeug 3 und eine Einrichtung 4.

Die Schnittstellenvorrichtung 2 ist dabei insbesondere als Server beziehungsweise als Back-End ausgebildet. Die Schnittstellenvorrichtung 2 ist auch ein so genannten modularer Back-End-Baukasten (MBB). Das Kraftfahrzeug 3 ist insbesondere als Personenkraftwagen (PKW) ausgebildet. Die Einrichtung 4 ist insbesondere als Smartphone ausgebildet. Die Einrichtung 4 umfasst ein mobiles Betriebssystem, welches eine Laufzeitumgebung zur Ausführung von mobilen Applikationsprogrammen bereitstellt. Das Betriebssystem ist insbesondere als mobiles Betriebssystem ausgebildet und kann beispielsweise als Android, BlackBerryOS, Apple iOS, Windows Phone oder aber als eine Linux-Distribution vorliegen. Insbesondere ist eine Mehrzahl von mobilen Applikationsprogrammen auf der Einrichtung 4 installiert.

Die Schnittstellenvorrichtung 2 weist einen Prozessor 5 und einen Speicher 6 auf. Die Schnittstellenvorrichtung 2 liegt damit also insbesondere als Server beziehungsweise als Teil eines Servernetzwerks beziehungsweise einer Serverlandschaft vor.

Die Schnittstellenvorrichtung 2, das Kraftfahrzeug 3 und die Einrichtung 4 sind insbesondere räumlich getrennt voneinander angeordnet. Zwischen dem Kraftfahrzeug 3 und der Schnittstellenvorrichtung 2 wird eine Kommunikationsverbindung 7 hergestellt. Zwischen der Einrichtung 4 und der Schnittstellenvorrichtung 2 wird eine Kommunikationsverbindung 8 hergestellt. Die jeweilige Kommunikationsverbindung 7, 8 kann beispielsweise eine drahtlose Verbindung, insbesondere als mobile Datenverbindung umfassen. Für die jeweilige Kommunikationsverbindung 7, 8 kann das IP (Internet Protocol) verwendet werden.

Die Schnittstellenvorrichtung 2 stellt eine Schnittstelle 9 bereit. Durch die Schnittstelle 9 wird eine Vielzahl von gültigen Funktionsbefehlen 10 bereitgestellt. Die Schnittstelle 9 ist dabei insbesondere als Programmierschnittstelle (API) ausgebildet. Die Schnittstelle 9 ist vorzugsweise als funktionsorientierte Programmierschnittstelle ausgebildet, kann aber beispielsweise auch als dateiorientierte Programmierschnittstelle, objektorientierte Programmierschnittstelle oder aber protokollorientierte Programmierschnittstelle ausgebildet sein. Die Schnittstelle 9 kann aber auch als Binärschnittstelle (ABI - application binary interface) ausgebildet sein.

In der Einrichtung 4 wird nun beispielsweise ein Funktionsbefehl 11 erzeugt. Der Funktionsbefehl 11 kann beispielsweise durch ein Applikationsprogramm der Einrichtung 4 erzeugt werden. Durch den Funktionsbefehl 11 kann beispielsweise ein Entsperren des Kraftfahrzeugs 3 durchgeführt werden. So kann der Funktionsbefehl 11 beispielsweise ein Aufsperren oder aber ein Zusperren eines Schlosses des Kraftfahrzeugs 3 bewirken. Weiterhin kann der Funktionsbefehl 11 beispielsweise ein Navigationsupdate des Kraftfahrzeugs 3, ein Update einer Konfigurationseinstellung eines Steuergeräts des Kraftfahrzeugs 3, eine Klimatisierung des Kraftfahrzeugs 3 vor Reiseantritt, eine Standheizungsfunktion des Kraftfahrzeugs 3, eine Lichtsteuerung des Kraftfahrzeugs 3, ein pilotiertes Parken des Kraftfahrzeugs 3, ein Batterieladen des Kraftfahrzeugs 3, eine Geschwindigkeitswarnung des Kraftfahrzeugs 3, eine Fahrzeugsuche, einen Fahrtenbucheintrag, einen Tankbucheintrag, eine Pannen- und Unfallhilferuffunktion, eine Bezahlfunktion und/oder einen Zugriff auf ein soziales Netzwerk bewirken.

Durch den Funktionsbefehl 11 kann beispielsweise auch eine Diebstahlwarnung, ein Blinken des Kraftfahrzeugs 3, ein Hupen des Kraftfahrzeugs 3 oder eine Batteriestatusausgabe des Kraftfahrzeugs 3 bewirkt werden.

Der von der Einrichtung 4 erzeugte Funktionsbefehl 11 wird von der Einrichtung 4 an die Schnittstellenvorrichtung 2 übermittelt. Die Übermittlung geschieht über die Kommunikationsverbindung 8 zwischen der Einrichtung 4 und der Schnittstellenvorrichtung 2. In der Schnittstellenvorrichtung 2 wird der Funktionsbefehl 11 mit der Vielzahl gültiger Funktionsbefehle 10 verglichen. Anhand des Vergleichs wird bestimmt, ob der Funktionsbefehl 11 schnittstellenkonform ist. Es wird also überprüft, ob Programmkomponenten des Funktionsbefehls 11 mit den durch die Schnittstelle 9 gemachten Vorgaben übereinstimmen. Liegt die Übereinstimmung der Programmkomponente des Funktionsbefehls 11 mit der durch die Schnittstelle 9 gemachten Vorgaben vor, so kann der Funktionsbefehl 11 als schnittstellenkonform angenommen werden.

Die Übermittlung des Funktionsbefehls 11 der Schnittstellenvorrichtung 2 kann entweder im Zuge einer Entwicklungsphase des Funktionsbefehls 11 erfolgen, in welchem der Funktionsbefehl 11 dann nur als auf die Schnittstellenkonformität überprüfter Funktionsbefehl 11 innerhalb der Schnittstellenvorrichtung 2 oder an die Einrichtung 4 weitergeleitet wird. Es ist also nicht notwendig, dass der Funktionsbefehl 11 während der Entwicklungsphase an das Kraftfahrzeug 3 weitergeleitet wird.

Während des operativen Betriebs des Kraftfahrzeugs 3 kann der Funktionsbefehl 11 dann ausgehend von der Schnittstellenvorrichtung 2 nach erfolgter Überprüfung auf die Schnittstellenkonformität an das Kraftfahrzeug 3 weitergeleitet werden. Dort kann dann beispielsweise abhängig von dem Funktionsbefehl 11 eine Kraftfahrzeugkomponente 12 des Kraftfahrzeugs 3 bezüglich eines Zustands angepasst werden. So kann die Kraftfahrzeugkomponente 12 beispielsweise als Schloss, Aktor, Steuergerät, Anzeigeeinheit oder Datenspeicher ausgebildet sein.

Ergänzend oder alternativ kann der Funktionsbefehl 11 aber auch in dem Kraftfahrzeug 3 erzeugt werden. Der im Kraftfahrzeug 3 erzeugte Funktionsbefehl 11 wird dann beispielsweise von dem Kraftfahrzeug 3 über die Kommunikationsverbindung 7 an die Schnittstellenvorrichtung 2 übermittelt. Dort wird der Funktionsbefehl 11 dann wiederum mit der Vielzahl der gültigen Funktionsbefehle 10 verglichen, um die Schnittstellenkonformität des Funktionsbefehls 11 zu überprüfen. Liegt diese Schnittstellenkonformität des Funktionsbefehls 11 dann vor, kann beispielsweise analog zu der bereits vorher beschriebenen Vorgehensweise während der Entwicklungsphase die Weiterleitung an die Einrichtung 4 unterbleiben, dafür kann die Weiterleitung innerhalb der Schnittstellenvorrichtung 2 oder zurück an das Kraftfahrzeug 3 erfolgen, um ein Ergebnis des Schnittstellenkonformitätstests des Funktionsbefehls 11 zu berichten.

Im operativen Betrieb des Kraftfahrzeugs 3 wird der Funktionsbefehl 11 an die Einrichtung 4 von der Schnittstellenvorrichtung 2 aus weitergeleitet, um dort einen Zustand einer Programmkomponente 13 der Einrichtung 4 anzupassen. Durch die Programmkomponente 13 kann beispielsweise eine Musikdatenbank, eine Navigationsdatenbank, ein Zugriff auf ein soziales Netzwerk, eine Adressdatenbank oder aber ein beliebiger Zustand der Einrichtung 4 angepasst werden.

Durch das Bereitstellen der Schnittstelle 9 der Schnittstellenvorrichtung 2 werden also beide Entwicklungsschritte, sowohl von Funktionsbefehlen 11, welche im Kraftfahrzeug 3 erzeugt werden, als auch von Funktionsbefehlen 11, welche in der Einrichtung 4 erzeugt werden, entkoppelt. Das Kraftfahrzeug 3 ist somit nur abzusichern gegenüber der Schnittstellenvorrichtung 2 und die Einrichtung 4 ist ebenfalls nur gegenüber der Schnittstellenvorrichtung 2 abzusichern. Es ist für das Entwickeln des Funktionsbefehls 11 lediglich das Kraftfahrzeug 3 in Verbindung mit der Schnittstellenvorrichtung 2 oder die Einrichtung 4 in Verbindung mit der Schnittstellenvorrichtung 2 nötigt.

Weitere Vorteile der Schnittstelle 9 sind beispielsweise, dass dadurch eine höhere Robustheit des Funktionsbefehls 11 erreicht werden kann. So können beispielsweise Fehler bei der Implementierung des Funktionsbefehls 11 durch das Senden des Funktionsbefehls 11 gegen die Schnittstelle 9 frühzeitig erkannt werden. Zudem kann beispielsweise eine fehlerhafte Übertragung des Funktionsbefehls 11 über die jeweilige Kommunikationsverbindung 7, 8 erkannt werden.

Weiterhin können mehrere Schnittstellen 9, beispielsweise für verschiedene Fahrzeugklassen von Kraftfahrzeugen, bereitgestellt werden, sodass durch die Schnittstellenvorrichtung 2 jeweils die einer individuellen Fahrzeugklasse funktionell zugeordnete Schnittstelle 9 bereitgestellt werden kann.

## Patentansprüche

1. Verfahren zum Übertragen eines Funktionsbefehls (11) zwischen einem Kraftfahrzeug (3) und einer fahrzeugexternen Einrichtung (4), bei welchem der Funktionsbefehl (11) über eine eine Kommunikationsverbindung zwischen dem Kraftfahrzeug (3) und der Einrichtung (4) bereitstellende fahrzeugexterne Schnittstellenvorrichtung (2) übertragen wird, und durch die Schnittstellenvorrichtung (2) eine Schnittstelle (9) bereitgestellt wird, durch welche eine Vielzahl von gültigen Funktionsbefehlen (10) bereitgestellt wird,
**dadurch gekennzeichnet, dass**
die Schnittstellenvorrichtung (2) außerhalb des Kraftfahrzeugs (3) und außerhalb der fahrzeugexternen Einrichtung (4) angeordnet und als stationärer Server ausgebildet ist und
die Schnittstelle (9) als Programmierschnittstelle, API, oder als funktionsorientierte Programmierschnittstelle oder als dateiorientierte Programmierschnittstelle oder objektorientierte Programmierschnittstelle oder protokollorientierte Programmierschnittstelle oder als Binärschnittstelle, ABI, ausgebildet ist und
der Funktionsbefehl (11) zwischen dem Kraftfahrzeug (3) und der Einrichtung (4) nur über die Schnittstelle (9) der Schnittstellenvorrichtung (2) übertragen wird und
in der Schnittstellenvorrichtung (2) der Funktionsbefehl (11) mit der Vielzahl von gültigen Funktionsbefehlen (10) verglichen wird und anhand des Vergleichs bestimmt wird, ob der Funktionsbefehl (11) schnittstellenkonform ist, und der Funktionsbefehl (11) nur weitergeleitet wird, falls dieser Funktionsbefehl (11) schnittstellenkonform ist.

2. Verfahren nach Anspruch 1,
**dadurch gekennzeichnet, dass**
der Funktionsbefehl (11) mit der Vielzahl der gültigen Funktionsbefehle (10) der Schnittstelle (9) verglichen wird, und bei einer Abweichung zwischen dem Funktionsbefehl (11) und jedem der gültigen Funktionsbefehle (10) der Schnittstelle (9) ein Fehler des Funktionsbefehls (11) erkannt wird.

3. Verfahren nach Anspruch 1 oder 2,
**dadurch gekennzeichnet, dass**
der Funktionsbefehl (11) von der Einrichtung (4) an das Kraftfahrzeug (3) gerichtet wird, und durch den Funktionsbefehl (11) ein Zustand einer Kraftfahrzeugkomponente (12) des Kraftfahrzeugs (3) angepasst wird.

4. Verfahren nach Anspruch 1 oder 2,
**dadurch gekennzeichnet, dass**
der Funktionsbefehl (11) von dem Kraftfahrzeug (3) an die Einrichtung (4) gerichtet wird, und durch den Funktionsbefehl (11) zumindest ein Zustand einer Programmkomponente (13) der Einrichtung (4) angepasst wird.

5. Verfahren nach einem der vorhergehenden Ansprüche,
**dadurch gekennzeichnet, dass**
der Funktionsbefehl (11) zwischen dem Kraftfahrzeug (3) und der Einrichtung (4) während einer Entwicklungsphase des Funktionsbefehls (11) über die Schnittstelle (9) übertragen wird.

6. Verfahren nach einem der vorhergehenden Ansprüche,
**dadurch gekennzeichnet, dass**
der Funktionsbefehl (11) zwischen dem Kraftfahrzeug (3) und der Einrichtung (4) während eines operativen Betriebs des Kraftfahrzeugs (3) über die Schnittstelle (9) übertragen wird.

7. Verfahren nach einem der vorhergehenden Ansprüche,
**dadurch gekennzeichnet, dass**
beim Übertragen des Funktionsbefehls (11) eine Sicherheitssignatur im Kraftfahrzeug (3) und/oder in der Einrichtung (4) überprüft wird, und die Sicherheitssignatur auch in der Schnittstellenvorrichtung (2) überprüft wird.

8. Schnittstellenvorrichtung (2) mit einem Prozessor (5) und einer Speichereinheit (6), welche dazu ausgebildet ist, einen Funktionsbefehl (11) von einem Kraftfahrzeug (3) und/oder von einer fahrzeugexternen Einrichtung (4) zu empfangen, wobei die Schnittstellenvorrichtung (2) eine Schnittstelle (9) bereitstellt, welche eine Vielzahl von gültigen Funktionsbefehlen (10) umfasst,
**dadurch gekennzeichnet, dass**
die Schnittstellenvorrichtung (2) als stationärer Server ausgebildet ist und dazu ausgebildet ist, außerhalb des Kraftfahrzeugs (3) und außerhalb der fahrzeugexternen Einrichtung (4) angeordnet betrieben zu werden, und die Schnittstelle (9) als Programmierschnittstelle, API, oder als funktionsorientierte Programmierschnittstelle oder als dateiorientierte Programmierschnittstelle oder objektorientierte Programmierschnittstelle oder protokollorientierte Programmierschnittstelle oder als Binärschnittstelle, ABI, ausgebildet ist und die Schnittstellenvorrichtung (2) dazu ausgebildet ist, den Funktionsbefehl (11) mit der Vielzahl von gültigen Funktionsbefehlen (10) zu vergleichen und anhand des Vergleichs zu bestimmen, ob der Funktionsbefehl (11) schnittstellenkonform ist, und den Funktionsbefehl (11) nur weiterzuleiten, falls dieser Funktionsbefehl (11) schnittstellenkonform ist.

9. System (1) mit einem Kraftfahrzeug (3) und/oder einer fahrzeugexternen, schnittstellenvorrichtungsexternen Einrichtung (4) und einer Schnittstellenvorrichtung (2) nach Anspruch 8.

10. System (1) nach Anspruch 9,
**dadurch gekennzeichnet, dass**
die Einrichtung (4) als mobiles Endgerät, insbesondere Smartphone, ausgebildet ist.

## Claims

1. Method for transmitting a function command (11) between a motor vehicle (3) and an off-board device (4), wherein the function command (11) is transmitted via a communication link between the motor vehicle (3) and the interface device (2) providing the off-board device (4), wherein an interface (9) is provided by the interface device (2) to provide a plurality of valid function commands (10),
**characterised in that**
the interface device (2) is arranged outside the motor vehicle (3) and outside the off-board device (4) and is in the form of as a stationary server, and
the interface (9) is designed as a programming interface, API, or as a function-oriented programming, or as a file-oriented programming interface, or an object-oriented programming interface, or a protocol-oriented programming interface, or as a binary interface, ABI, and
the function command (11) is only transmitted between the motor vehicle (3) and the device (4) via the interface (9) of the interface device (2), and
the function command (11) is compared in the interface device (2) with the plurality of valid function commands (10) and, based on this comparison, it is determined whether the function command (11) is interface compliant, wherein the function command (11) is forwarded only if the function command (11) is interface compliant.

2. Method according to claim 1,
**characterised in that**
the function command (11) is compared with the plurality of valid function commands (10) of the interface (9), and in the event of a deviation between the function command (11) and each of the valid function commands (10), the interface (9) identifies an error of the function command (11).

3. Method according to claim 1 or 2,
**characterised in that**
the function command (11) is directed from the device (4) to the motor vehicle (3), and the state of a motor vehicle component (12) of the motor vehicle (3) is adjusted by the function command (11).

4. Method according to claim 1 or 2,
**characterised in that**
the function command (11) is directed from the motor vehicle (3) to the device (4), and at least one state of a program component (13) of the device (4) is adjusted by the function command (11).

5. Method according to any one of the preceding claims,
**characterised in that**
the function command (11) is transmitted between the motor vehicle (3) and the device (4) via the interface (9) during a development phase of the function command (11).

6. Method according to any one of the preceding claims,
**characterised in that**
the function command (11) is transmitted between the motor vehicle (3) and the device (4) during an operative operation of the motor vehicle (3) via the interface (9).

7. Method according to any one of the preceding claims,
**characterised in that**
upon transmitting the function command (11), a safety signature in the motor vehicle (3) and/or in the device (4) is checked, and the safety signature is also checked in the interface device (2).

8. Interface device (2) with a processor (5) and a memory unit (6) which is designed to receive a function command (11) from a motor vehicle (3) and/or from an off-board device (4), wherein the interface device (2) provides an interface (9), which comprises a plurality of valid function commands (10),
**characterized in that**
the interface device (2) is designed as a stationary server and is designed to be arranged outside the motor vehicle (3) and outside the off-board device (4) to be operated,
wherein the interface (9) is in the form of a programming interface, API, or a function-oriented programming interface or a file-oriented programming interface. or an object-oriented programming interface, or a protocol-oriented programming interface, or a binary interface, ABI, wherein the interface device (2) is designed to compare the function command (11) with the plurality of valid function commands (10) and, based on the comparison, to determine whether the function command (11) is interface compliant, and only to forward the function command (11) if that function command (11) is interface compliant.

9. System (1) with a motor vehicle (3) and/or an off-board device (4) and an interface device (2) according to claim 8.

10. System (1) according to claim 9,
**characterised in that**
the device (4) is in the form of a mobile terminal, in particular a smartphone.

## Revendications

1. Procédé servant à transmettre une instruction fonctionnelle (11) entre un véhicule automobile (3) et un dispositif (4) externe au véhicule, où l'instruction fonctionnelle (11) est transmise par l'intermédiaire d'un dispositif d'interface (2) externe au véhicule fournissant une liaison de communication entre le véhicule automobile (3) et le dispositif (4), et une interface (9) est fournie par le dispositif d'interface (2), par laquelle une pluralité d'instructions fonctionnelles valides (10) est fournie,
**caractérisé en ce que**
le dispositif d'interface (2) est disposé à l'extérieur du véhicule automobile (3) et à l'extérieur du dispositif (4) externe au véhicule et est réalisé sous la forme d'un serveur stationnaire, et
l'interface (9) est réalisée sous la forme d'une interface de programmation, API, ou sous la forme d'une interface de programmation orientée fonction ou sous la forme d'une interface de programmation orientée fichier ou d'une interface de programmation orientée objet ou d'une interface de programmation orientée protocole ou sous la forme d'une interface binaire, ABI, et
l'instruction fonctionnelle (1) est transmise entre le véhicule automobile (3) et le dispositif (4) seulement par l'intermédiaire de l'interface (9) du dispositif d'interface (2), et
dans le dispositif d'interface (2), l'instruction fonctionnelle (11) est comparée à la pluralité d'instructions fonctionnelles valides (10) et il est défini à l'aide de la comparaison si l'instruction fonctionnelle (11) est conforme à l'interface, et l'instruction fonctionnelle (11) est transférée seulement si ladite instruction fonctionnelle (11) est conforme à l'interface.

2. Procédé selon la revendication 1,
**caractérisé en ce que**
l'instruction fonctionnelle (11) est comparée à la pluralité des instructions fonctionnelles valides (10) de l'interface (9) et une erreur de l'instruction fonctionnelle (11) est identifiée dans le cas d'un écart entre l'instruction fonctionnelle (11) et chacune des instructions fonctionnelles valides (10) de l'interface (9).

3. Procédé selon la revendication 1 ou 2,
**caractérisé en ce que**
l'instruction fonctionnelle (11) est adressée par le dispositif (4) au véhicule automobile (3), et un état d'un composant de véhicule automobile (12) du véhicule automobile (3) est adapté par l'instruction fonctionnelle (11).

4. Procédé selon la revendication 1 ou 2,
**caractérisé en ce que**
l'instruction fonctionnelle (11) est adressée par le véhicule automobile (3) au dispositif (4), et au moins un état d'un composant de programme (13) du dispositif (4) est adapté par l'instruction fonctionnelle (11).

5. Procédé selon l'une quelconque des revendications précédentes,
**caractérisé en ce que**
l'instruction fonctionnelle (11) est transmise entre le véhicule automobile (3) et le dispositif (4) pendant une phase de développement de l'instruction fonctionnelle (11) par l'intermédiaire de l'interface (9).

6. Procédé selon l'une quelconque des revendications précédentes,
**caractérisé en ce que**
l'instruction fonctionnelle (11) est transmise entre le véhicule automobile (3) et le dispositif (4) pendant un fonctionnement opérationnel du véhicule automobile (3) par l'intermédiaire de l'interface (9).

7. Procédé selon l'une quelconque des revendications précédentes,
**caractérisé en ce que**
lors de la transmission de l'instruction fonctionnelle (11), une signature de sécurité est vérifiée dans le véhicule automobile (3) et/ou dans le dispositif (4), et la signature de sécurité est également vérifiée dans le dispositif d'interface (2).

8. Dispositif d'interface (2) avec un processeur (5) et une unité de mémoire (6), laquelle est réalisée pour recevoir une instruction fonctionnelle (11) d'un véhicule automobile (3) et/ou d'un dispositif (4) externe au véhicule, dans lequel le dispositif d'interface (2) fournit une interface (9), laquelle comprend une pluralité d'instructions fonctionnelles valides (10),
**caractérisé en ce que**
le dispositif d'interface (2) est réalisé sous la forme d'un serveur stationnaire et est réalisé pour fonctionner en étant disposé à l'extérieur du véhicule automobile (3) et à l'extérieur du dispositif (4) externe au véhicule,
et l'interface (9) est réalisée sous la forme d'une interface de programmation, API, ou sous la forme d'une interface de programmation orientée fonction ou sous la forme d'une interface de programmation orientée fichier ou sous la forme d'une interface de programmation orientée objet ou d'une interface de programmation orientée protocole ou sous la forme d'une interface binaire, ABI et le dispositif d'interface (2) est réalisé pour comparer l'instruction fonctionnelle (11) à la pluralité d'instructions fonctionnelles valides (10) et pour définir à l'aide de la comparaison si l'instruction fonctionnelle (11) est conforme à l'interface, et pour transférer l'instruction fonctionnelle (11) seulement si ladite instruction fonctionnelle (11) est conforme à l'interface.

9. Système (1) avec un véhicule automobile (3) et/ou un dispositif (4) externe au véhicule, externe au dispositif d'interface et un dispositif d'interface (2) selon la revendication 8.

10. Système (1) selon la revendication 9,
**caractérisé en ce que**
le dispositif (4) est réalisé sous la forme d'un terminal mobile, en particulier d'un téléphone intelligent.
